# EUROPÄISCHE PATENTSCHRIFT

(11) **EP 1 825 167 B1**
(45) Veröffentlichungstag und Bekanntmachung des Hinweises auf die Patenterteilung: **09.01.2013**
(21) Anmeldenummer: 05817100.0
(22) Anmeldetag: 29.11.2005
(51) Int. Cl.: F16H 25/20, F16H 57/00, B25J 9/12

(54) **ELEKTRISCH ANGETRIEBENER LINEARAKTUATOR**
ELECTRICALLY DRIVEN LINEAR ACTUATOR
ACTIONNEUR LINEAIRE A ENTRAINEMENT ELECTRIQUE

(30) Priorität: 07.12.2004 DE 102004058935
(43) Veröffentlichungstag der Anmeldung: 29.08.2007
(73) Patentinhaber: Bosch Rexroth AG, 70184 Stuttgart (DE)
(72) Erfinder: YMKER, Leo, NL-5345 TJ Oss (NL)
(74) Vertreter: Winter, Brandl, Fürniss, Hübner, Röss, Kaiser, Polte - Partnerschaft
(86) Internationale Anmeldenummer: PCT/EP2005/056290
(87) Internationale Veröffentlichungsnummer: WO 2006/061337

(56) Entgegenhaltungen:
- EP-A- 0 632 181
- EP-A- 1 270 369
- US-A- 4 712 441
- US-A- 6 145 395
- PATENT ABSTRACTS OF JAPAN Bd. 2000, Nr. 01, 31. Januar 2000 (2000-01-31) & JP 11 270651 A (ICHIKOH IND LTD), 5. Oktober 1999 (1999-10-05)

## Beschreibung

Die vorliegende Erfindung bezieht sich auf einen elektrisch angetriebenen Linearaktuator gemäß dem Oberbegriff des Anspruchs 1, wie er aus der EP-A 0 632 181 bekannt ist.

Elektrisch angetriebene Linearaktuatoren können z.B. dazu verwendet werden, einen bestimmten Gegenstand (Masse) in linearer Richtung hin und her zu bewegen, wobei im Gegensatz etwa zu hydraulisch angetriebenen Linearaktuatoren in der Regel eine wesentlich höhere Stellpräzision erzielbar und die Ansteuerung unkomplizierter ist. Weiterhin besteht nicht die Gefahr einer Verschmutzung durch austretendes Hydrauliköl.

Bereits bekannte elektrisch angetriebene Linearaktuatoren (siehe beispielsweise US 6.145.395 oder US 4.712.441) wirken auf den zu verstellenden Gegenstand über ein rohrförmiges Aktuatorelement ein, das abtriebsseitig mit diesem Gegenstand in geeigneter Weise kraftschlüssig gekoppelt ist. Das rohrförmige Aktuatorelement ist innerhalb eines Hauptrohrs (das in der Regel gleichzeitig als Gehäuse dient) in Axialrichtung gleitend gelagert und antriebsseitig mit einer Spindelmutter gekoppelt, die ihrerseits auf einer innerhalb des Hauptrohrs drehbar gelagerten und (in der Regel über ein Untersetzungsgetriebe) von einem Elektromotor in eine Drehbewegung versetzten Spindel sitzt. Unter der Voraussetzung, dass die Spindelmutter drehfest gehalten ist (und zwar entweder durch einen Anschlag innerhalb des Hauptrohrs oder durch den zu bewegenden Gegenstand selbst), bewirkt jede Drehung der Spindel daher eine Axialbewegung der Spindelmutter, so dass das mit ihr gekoppelte Aktuatorelement teleskopartig bezüglich des Hauptrohrs verschoben wird. Da andererseits das Hauptrohr bezüglich des zu bewegenden Gegenstands ortsfest montiert ist, wird auf diesen Gegenstand, je nach Drehrichtung des Motors, entweder eine Zug- oder eine Schubkraft ausgeübt - der Gegenstand wird entsprechend linear verschoben.

In der US 4.500.805 ist ein elektrisch angetriebener Linearaktuator offenbart, bei dem der auf den zu bewegenden Gegenstand einwirkende Aktuator aus insgesamt vier stabförmigen Aktuatorelementen besteht, die konzentrisch in einem gleichen Winkelabstand von 90 Grad um die zentral verlaufende Spindel herum angeordnet sind. Mit dieser Vierfachanordnung soll die Steifigkeit des Linearaktuators verbessert werden, was insbesondere bei sehr langen Aktuatoren von Bedeutung ist. Die grundsätzliche Arbeitsweise dieses Aktuators unterscheidet sich in sonstiger Hinsicht jedoch nicht von der der eingangs beschriebenen Aktuatoren mit nur einem Aktuatorelement.

Ein Anwendungsfall der gattungsgemäßen Linearaktuatoren ist beispielsweise ein Fahr- oder Flugsimulator, bei dem das Simulationsobjekt in insgesamt sechs Freiheitsgraden bewegt werden muss; demgemäß werden hierfür sechs getrennt ansteuerbare Linearaktuatoren benötigt.

Ein grundsätzliches Problem der gattungsgemäßen elektrischen Linearaktuatoren liegt in der unerwünschten Erzeugung von Lärm und insbesondere von Vibrationen; beide Emissionsarten sind in vielen Anwendungsfällen - vor allem aber bei der erwähnten Fahr- oder Flugsimulationstechnik - von entscheidendem Nachteil, da hierdurch die zu erzielenden Messwerte unzulässig verfälscht werden können. Beispielsweise hängt bei derartigen Simulationsverfahren die Simulationsqualität in hohem Maße davon ab, dass neben der visuellen Information und der Kraft-Rückkopplung auch die erzeugten Beschleunigungswerte und die simulierten Töne (Audio-Information des simulierten Geschehens) weitgehend exakt und unverfälscht wiedergegeben werden; die beiden letzten Betriebsparameter werden aber durch die den bekannten Linearaktuatoren innewohnenden Vibrationen bzw. durch den von ihnen erzeugten Lärm verfälscht.

Untersuchungen haben gezeigt, dass die Hauptursache für die erzeugten Vibrationen in der mechanischen Übertragung der Motordrehung auf die Spindel (also im Getriebe), in der Umwandlung der Drehbewegung in eine Linearbewegung durch die mit der Spindelmutter kämmende Spindel sowie in der antriebsseitigen Lagerung der Spindel zu suchen sind. Die Lärmentwicklung ist demgegenüber insbesondere auf diejenigen Schwingungen des zu bewegenden Objekts zurückzuführen, die durch die Vibrationen des mit dem Objekt mechanisch gekoppelten Linearaktuators angeregt werden.

Da auch bei Einsatz sehr hochwertiger Getriebe, Spindeln und/oder Lager keine nennenswerte Reduzierung der Vibrationen erreicht werden konnte, wurde schließlich in Erwägung gezogen, das zu bewegende Objekt über ein zwischengeschaltetes elastisches Glied mit dem Ende des Aktuators zu koppeln. Abgesehen davon, dass dadurch die Länge des Linearaktuators häufig in nicht zulässiger Weise vergrößert wird, wurden noch folgende Nachteile dieser Lösung festgestellt:
1) Ein elastisches Zwischenglied zeigt bereits nach vergleichsweise kurzem Betrieb Ermüdungserscheinungen, die die gewünschte Soll-Bewegungsstrecke verfälschen.
2) Es ist schwierig, die Dämpfungscharakteristik des Zwischenglieds für alle Betriebszustände so einzustellen, dass zu erzeugende Schwingbewegungen des Objekts einerseits nicht gedämpft und die (in der Regel höherfrequenten) Vibrations-Schwingungen gleichwohl unschädlich gemacht werden können.
3) Das elastische Zwischenglied ist den jeweiligen Umgebungsbedingungen ausgesetzt, wobei es oft schwierig ist, ein Material zu finden, das eine ausreichende Temperaturfestigkeit im Bereich von -21 bis 70 Grad C und gleichzeitig eine genügende Widerstandsfähigkeit gegenüber Öl oder Lösungsmitteln besitzt.
4) Das Zwischenglied verformt sich nicht nur elastisch in der Aktuationsrichtung, sondern auch in den Querrichtungen hierzu; während die Verformung in der Aktuationsrichtung durch entsprechende Stell- oder Regelungsmaßnahmen bei der Ansteuerung des Spindelantriebs kompensiert werden kann, sind die Verformungen in die anderen Richtungen nur schwer zu kompensieren und verfälschen daher die Ergebnisse einer Simulation.

Der vorliegenden Erfindung liegt demgemäß die Aufgabe zugrunde, einen elektrisch angetriebenen Linearaktuator so weiterzubilden, dass die Übertragung von Vibrationen auf das zu bewegende Objekt sicher verhindert werden kann, und zwar ohne dadurch die Einsatzfähigkeit des Aktuators einzuschränken und seine Stellgenauigkeit zu verringern.

Diese Aufgabe wird erfindungsgemäß mit den im Anspruch 1 angegebenen Maßnahmen gelöst.

Jedes Aktuatorelement ist aus zwei Rohren gebildet, die konzentrisch unter Bildung eines rohrförmigen Spalts vorbestimmter Dicke ineinander angeordnet und mittels eines in diesem Spalt befindlichen elastomeren Materials kraftschlüssig miteinander verbunden sind, wobei die beiden konzentrischen Rohre durch den Gehäusekopf nach außen treten. Indem nun ferner vorgesehen ist, eines der beiden konzentrischen Rohre auf das zu bewegende Objekt (Masse) einwirken zu lassen und das andere mit der Spindelmutter zu koppeln, wird erreicht, dass das elastomere Material die durch den Antrieb des Aktuators hervorgerufenen Vibrationen zuverlässig von dem zu bewegenden Objekt entkoppelt bzw. fernhält. Dadurch wird ein mechanisches Filter zwischen dem zu bewegenden Objekt und den Antriebskomponenten geschaffen, so dass der Linearaktuator keinen negativen Einfluss auf das zu bewegende Objekt ausüben kann.

Bei dem eingangs erwähnten Anwendungsfall eines Fahr- oder Flugsimulators treten somit keine die Messergebnisse verfälschenden Vibrationen am Simulationsobjekt auf; auch wird dieses nicht zur Erzeugung unerwünschten Schalls angeregt.

Untersuchungen haben gezeigt, dass es bei geeigneter Wahl der Dicke des rohrförmigen Spalts und/oder des Gleitmoduls des verwendeten elastomeren Materials problemlos möglich ist, ein Vibrationsdämpfungsverhalten zu erzielen, das Vibrationen fast ausschließlich in der Aktuationsrichtung dämpft, während in den Querrichtungen hierzu eine hohe Steifigkeit aufrechterhalten werden kann. Somit wird trotz der vibrationsdämpfenden Wirkung weiterhin eine sehr hohe Stellgenauigkeit erlaubt.

Ein weiterer Vorteil liegt darin, dass die Baulänge des Linearaktuators nicht vergrößert wird, so dass sein Einsatzspektrum unverändert beibehalten werden kann.

Dadurch, dass das elastomere Material in dem Spalt zwischen den beiden konzentrischen Rohren vor Umwelteinflüssen sehr gut geschützt ist, kann es durch Öl oder Lösungsmittel kaum angegriffen werden; auch der thermische Einfluss auf das elastomere Material wird durch die es umgebenden Rohre vergleichmäßigt, so dass in der Praxis selbst Temperaturen im Bereich von -21 bis + 70 Grad Celsius kein Problem darstellen. Schließlich sind durch die geschützte Anordnung des elastomeren Materials auch vorzeitige Ermüdungserscheinungen ausgeschlossen, so dass die Zuverlässigkeit und Betriebssicherheit des Linearaktuators hoch bleiben.

Gemäß der Lehre des Anspruchs 2 wird bevorzugt das innere der beiden konzentrischen Rohre mit dem zu bewegenden Objekt und das äußere mit der Spindelmutter gekoppelt, da dies bei der spezifischen Ausführungsform des Linearaktuators herstellungstechnisch einfacher ist. Eine besonders einfache Ankopplung kann gemäß Anspruch 3 in diesem Fall dann erzielt werden, wenn das innere Rohr an seinem dem zu bewegenden Objekt zugewandten Ende aus dem äußeren Rohr eine vorbestimmte Strecke in axialer Richtung herausragt.

Wenn das elastomere Material nach der Lehre des Anspruchs 4 aus einem elektrisch isolierenden Stoff besteht, wird das zu bewegende Objekt nicht nur vibrationsmäßig, sondern auch elektrisch von dem Linearaktuator entkoppelt; hierdurch wird beispielsweise eine ggf. erforderliche Erdung einer größeren Simulationsanlage wesentlich einfacher.

Die gewünschten Dämpfungseigenschaften des elastomeren Materials können gemäß Anspruch 5 nicht nur durch Wahl der Dicke des rohrförmigen Spalts und/oder der Größe des Gleitmoduls des verwendeten elastomeren Materials, sondern auch dadurch beeinflusst werden, dass das elastomere Material nur bereichsweise innerhalb des Spalts vorgesehen wird, also beispielsweise nur an den beiden Endbereichen der konzentrischen Rohre.

Als Material für das elastomere Material kann gemäß der Lehre des Anspruchs 6 beispielsweise Naturgummi, Silikongummi, Ethylen-Propylen-Dien-Terpolymer (EPDM) oder auch Polyurethan verwendet werden.

Im Folgenden wird die Erfindung anhand eines Ausführungsbeispiels unter Bezugnahme auf die Zeichnung näher erläutert.

Es zeigt:
Fig. 1 einen erfindunsgemäßen Linearaktuator in einem Längsschnitt; und
Fig. 2 eine vergrößerte Ansicht eines in Fig. 1 mit dem Bezugszeichen A gekennzeichneten Bereichs einer Variante des erfindungsgemäßen Linearaktuators zur Erläuterung einer Dichtung.

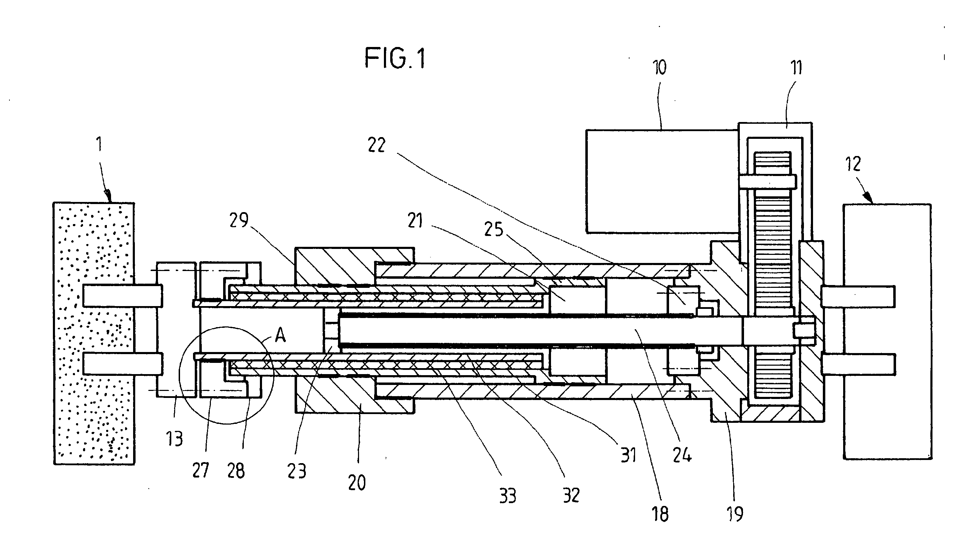

Wie aus Fig. 1 ersichtlich ist, weist der erfindungsgemäße Linearaktuator ein Gehäuserohr 18, an dessen einem Ende sich ein Gehäuseboden 19 und an dessen anderem Ende sich ein Gehäusekopf 20 befindet, ein rechter Hand an dem Gehäuseboden 19 befestigtes Getriebe 11 und einen Elektromotor 10 auf, der über das Getriebe 11 eine koaxial im Gehäuserohr 18 gelagerte Spindel 24 antreibt, die über ein getriebeseitiges Lager 22 und ein abtriebsseitiges Lager 23 drehbar gelagert ist. Auf der Spindel 24 sitzt eine Spindelmutter 21 in kämmendem Eingriff mit dem Außengewinde der Spindel 24. Die Spindelmutter 21 ist in einem Kolben 25 gehalten, der an einer Innenfläche des Gehäuserohrs 18 gleitbar gelagert ist, und über den Kolben 25 mit einem äußeren Zylinder bzw. Aktuatorrohr 31 gekoppelt, das zusammen mit einem inneren Zylinder bzw. Aktuatorrohr 32 und einer elastomeren Materialschicht 33, die die beiden Aktuatorrohre 31 und 32 kraftschlüssig verbindet, ein hohlzylindrisches Aktuatorelement bildet. Das äußere Aktuatorrohr 31 ist gleitend an der Innenfläche des Gehäusekopfs 20 gelagert, während das innere Aktuatorrohr 32 mit seiner zylindrischen Innenfläche das abtriebsseitige Lager 23 abstützt.

Der Linearaktuator ist über die Rückseite seines Getriebegehäuses 11 an einem ortsfesten Bezugspunkt 12 abgestützt bzw. befestigt. Das Ende des inneren Aktuatorrohrs 32, das aus dem äußeren Aktuatorrohr 31 eine vorbestimmte Strecke herausragt, ist mit einem Kupplungsstück 13 fest verbunden. Am Kupplungsstück 13 ist schließlich das mit dem Linearaktuator zu verschiebende Objekt (Masse) 1 befestigt. Dieses Objekt ist in dem hier gezeigten Anwendungsfall drehfest, d. h. dass durch die feste Verbindung mit dem Aktuatorrohr 32 über das kraftschlüssig verbindende elastomere Material 33 schließlich auch das äußere Aktuatorrohr 31 und damit die Spindelmutter 21 am Drehen gehindert wird. Somit wird die Spindelmutter 21 bei jeder Drehung der Spindel 24 um eine entsprechende Strecke nach links bzw. rechts bewegt, so dass auch das Objekt 1 gleichermaßen bewegt wird. Wenn das zu bewegende Objekt 1 hingegen keine drehfeste Lagerung besitzt, muss für die Spindelmutter 21 innerhalb des Linearaktuators eine Drehsperre vorgesehen werden, was beispielsweise mit einer Anschlagsfläche innen am Gehäuserohr 18 erfolgen kann.

Um zu erreichen, dass der Linearaktuator beim Zurückfahren in seine rechte Endstellung eine definierte Position einhält, die zu keinen Beschädigungen führt, ist ein äußeres Stoppglied in Form eines topfförmigen Rings 27 vorgesehen, der am äußeren Ende des inneren Aktuatorrohrs 32 befestigt ist und über einen Dämpfungsring 28 in der Endstellung des Linearaktuators an einer Stirnseite 29 des Gehäusekopfs 20 anliegt. Dadurch, dass der Dämpfungsring 28 vorzugsweise aus Silikon oder einem anderen gleitfähigen Material besteht, führen von dem Objekt 1 in dieser Endposition ausgeübte Torsionsmomente zu keiner Beschädigung der inneren Teile des Linearaktuators. Ein derartiger äußerer Endanschlag hat gegenüber einer intern angeordneten Lösung den Vorteil einer besseren Wartbarkeit.

Dadurch, dass das erfindungsgemäße Aktuatorelement aus zwei Rohren 31 und 32 gebildet ist, die konzentrisch unter Bildung eines rohrförmigen Spalts vorbestimmter Dicke ineinander angeordnet und mittels eines in diesem Spalt befindlichen elastomeren Materials kraftschlüssig miteinander verbunden sind, und da weiterhin nur das innere der beiden Rohre mit dem zu bewegenden Objekt 1 verbunden ist, wird erreicht, dass das elastomere Material 33 alle durch den Antrieb des Aktuators (Motor 10, Getriebe 11, Spindel 24 und Lagerung) hervorgerufenen Vibrationen zuverlässig von dem zu bewegenden Objekt 1 fernhält.

Das elastomere Material kann beispielsweise aus Naturgummi, Silikongummi, Ethylen-Propylen-Dien-Terpolymer (EPDM) oder auch Polyurethan bestehen. Generell sollten bei der Wahl des geeigneten Materials neben den gewünschten Dämpfungseigenschaften des fertigen Aktuators der Gleitmodul des jeweiligen Materials, seine allgemeinen Dämpfungscharakeristika (Verlustfaktor und Reibungsfaktor), seine Scherfestigkeit, seine Adhäsions- oder Klebeeigenschaften an Metall, sein Temperaturbereich und/oder auch seine Langzeiteigenschaften berücksichtigt werden.

Die Dämpfungseigenschaften können ferner durch geeignete Wahl der Dicke des zylindrischen Spalts zwischen den beiden Aktuatorrohren 31 und 32 beeinflusst werden. Eine weitere Einflussnahme auf die Dämpfungseigenschaften kann durch geeignete Wahl der Gesamt-Kontaktfläche des elastomeren Material 33 innerhalb des zylindrischen Spalts geschaffen werden, indem dieses elastomere Material - anders als bei der in der Zeichnung gezeigten Ausführungsform - beispielsweise nur partiell den im zylindrischen Spalt vorhandenen Raum ausfüllt; z.B. könnte das elastomere Material 33 nur an den beiden Endbereichen der Aktuatorrohre 31 und 32 vorgesehen sein oder Aussparungen in Axialrichtungen aufweisen.

Bei der Wahl der Dicke des zylindrischen Spalts, des Stoffs für das elastomere Material 33 und/oder der Größe eventueller Aussparungen im elastomeren Material bzw. im zylindrischen Spalt ist vorzugsweise darauf zu achten, dass die Dämpfung in axialer Richtung dies Aktuatorelements wesentlich größer als in seiner Durchmesserrichtung ist. Dadurch wird erreicht, dass trotz guter Dämpfungseigenschaften in axialer Richtung nur eine minimale Abweichung aus der Soll-Stellrichtung gewährleistet ist.

In jedem Fall muss das gewählte elastomere Material in Verbindung mit der zugeordneten Spaltdicke eine kraftschlüssige Verbindung zwischen den beiden konzentrischen Aktuatorrohren gewährleisten.

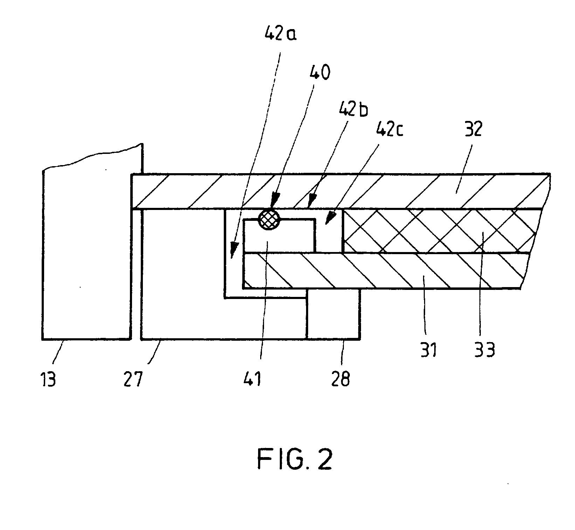

Wenn das verwendete elastomere Material gegenüber äußeren Einflüssen geschützt werden soll, kann gemäß der Darstellung in Fig. 2 im Spalt zwischen den beiden Rohren 31 und 32 an dem dem zu bewegenden Objekt 1 zugewandten Endbereich ein O-Ring 40 vorgesehen werden, der auf einem ringförmigen Befestigungselement 41 derart sitzt, dass er an der äußeren Umfangsfläche des inneren Rohres 32 mit einem solchen Druck anliegt, dass er einerseits die durch das elastomere Material 33 bedingten Bewegungen zwischen den beiden Rohren 31 und 32 nicht behindert und andererseits das Eindringen von Stoffen verhindert und dadurch das elastomere Material 33 schützt. Wie in Fig. 2 ferner ersichtlich ist, sind die Abmessungen des Befestigungselements 41 so gewählt, dass ausreichend große Freiräume 42a bis 42c vorhanden sind, um eine Berührung des Befestigungselements 41 mit der äußeren Umfangsfläche des inneren Rohres 32, dem Stoppglied 27 bzw. dem elastomeren Material 33 zu verhindern.

Zur Herstellung des erfindungsgemäßen Aktuatorelements können zahlreiche bekannte Verfahren herangezogen werden; beispielsweise kann das verwendete elastomere Material in flüssigem Zustand in den Spalt zwischen den beiden ausgerichteten Aktuatorrohren eingefüllt und dann beispielsweise durch Hitze oder mittels eines Härtermittels ausgehärtet werden.

Je nach Anwendungsfall kann es wünschenswert sein, das äußere Aktuatorrohr 31 mit dem zu bewegenden Objekt 1 zu koppeln. In diesem Fall muss das innere Aktuatorrohr 32 mit der Spindelmutter 21 verbunden werden; ferner ist es nicht notwendig, das innere Aktuatorrohr 32 abtriebsseitig aus dem äußeren Aktuatorrohr 31 herausragen zu lassen.

Das erläuterte Prinzip der Erfindung, d. h. die Verwendung eines aus zwei konzentrischen Aktuatorrohren bestehenden gedämpften Aktuatorelements, kann auch bei solchen Linearaktuatoren verwendet werden, die über mehrere Aktuatorelemente auf das zu verschiebende Objekt einwirken.

Bezüglich noch weiterer Merkmale und Vorteile der Erfindung wird im Übrigen auf die Zeichnung verwiesen.

### Bezugszeichenliste

- 1: Masse (zu bewegendes Objekt)
- 10: Elektromotor
- 11: Getriebe
- 12: Bezugspunkt
- 13: Kupplungsstück
- 18: Gehäuserohr
- 19: Gehäuseboden
- 20: Gehäusekopf
- 21: Spindelmutter
- 22,23: Lager
- 24: Spindel
- 25: Kolben
- 31: äußeres Aktuatorrohr
- 32: inneres Aktuatorrohr
- 33: elastomeres Material
- 27: Stoppglied
- 28: Dämpfungsring
- 29: Gehäuse-Stirnseite
- 40: O-Ring
- 41: Befestigungselement des O-Rings
- 42a-42c: Freiräume

## Patentansprüche

1. Elektrisch angetriebener Linearaktuator zum linearen Bewegen einer Masse (1), bei dem mindestens ein längliches Aktuatorelement (31, 32, 33), das abtriebsseitig auf die Masse (1) einwirkt, innerhalb eines Hauptrohrs (18, 20) in Axialrichtung gleitend gelagert und antriebsseitig mit einer Spindelmutter (21) gekoppelt ist, die ihrerseits auf einer innerhalb des Hauptrohrs (18, 20) drehbar gelagerten, von einem Elektromotor (10) in eine Drehbewegung versetzbaren Spindel (24) derart sitzt, dass sie bei ihrer durch eine Drehung der Spindel (24) hervorgerufenen Axialbewegung jedes Aktuatorelement (31, 32, 33) teleskopartig bezüglich des Hauptrohrs (18, 20) verschiebt, wobei
das Hauptrohr (18, 20) einen Gehäusekopf (20) aufweist, **dadurch gekennzeichnet, dass**
jedes Aktuatorelement aus zwei konzentrisch unter Bildung eines rohrförmigen Spalts vorbestimmter Dicke angeordneten Rohren (31, 32) gebildet ist, die mittels eines in diesem Spalt befindlichen elastomeren Materials (33) kraftschlüssig verbunden sind,
eines der beiden konzentrischen Rohre (31, 32) auf die zu bewegende Masse (1) einwirkt und das andere mit der Spindelmutter (21) gekoppelt ist, und
die beiden konzentrischen Rohre (31, 32) durch den Gehäusekopf (20) nach außen treten.

2. Linearaktuator nach Anspruch 1, ***dadurch gekennzeichnet,* dass** das innere der beiden konzentrischen Rohre (31, 32) auf die zu bewegende Masse (1) einwirkt und das äußere mit der Spindelmutter (21) gekoppelt ist.

3. Linearaktuator nach Anspruch 2, ***dadurch gekennzeichnet,* dass** das innere Rohr (32) an seinem der zu bewegenden Masse (1) zugewandten Ende aus dem äußeren Rohr (33) eine vorbestimmte Strecke in axialer Richtung herausragt.

4. Linearaktuator nach einem der Ansprüche 1 bis 3, ***dadurch gekennzeichnet,* dass** das elastomere Material (33) aus einem elektrisch isolierenden Stoff besteht.

5. Linearaktuator nach einem der Ansprüche 1 bis 4, ***dadurch gekennzeichnet,* dass** das elastomere Material (33) nur bereichsweise innerhalb des Spalts vorgesehen ist.

6. Linearaktuator nach einem der Ansprüche 1 bis 5, ***dadurch gekennzeichnet,* dass** das elastomere Material (33) aus Naturgummi, Silikongummi, Ethylen-Propylen-Dien-Terpolymer (EPDM) oder Polyurethan besteht.

7. Linearaktuator nach einem der Ansprüche 1 bis 6, ***dadurch gekennzeichnet,* dass** in dem Spalt zwischen den zwei konzentrisch angeordneten Rohren (31, 32) an seinem der zu bewegenden Masse (1) zugewandten Endbereich ein O-Ring (40) zum Schutz des elastomeren Materials (33) vor äußeren Einflüssen angeordnet ist.

## Claims

1. An electrically driven linear actuator for linearly moving a mass (1), wherein at least one elongated actuator element (31, 32, 33) which, on the output side, acts upon the mass (1), is mounted inside a main pipe (18, 20) in a manner that enables it to slide in an axial direction and which, on the input side, is coupled to a spindle nut (21) which, in turn, is inserted on a spindle (24) rotationally mounted inside said main pipe (18, 20) and which can be placed in rotational motion by an electric motor (10), in such a way that during its axial motion caused by a rotation of said spindle (24), it displaces each actuator element (31, 32, 33) in a telescopic manner with regard to the main pipe (18, 20), wherein
said main pipe (18, 20) comprises a housing head (20),
***characterized in that***
each actuator element is formed of two pipes (31, 32) concentrically arranged so as to form a tubular gap having a predetermined thickness, said pipes being frictionally connected through the intermediary of an elastomer material (33) located inside said gap,
with one of said two concentric pipes (31, 32) acting upon the mass (1) to be moved, and the other one being coupled to said spindle nut (21), and
said two concentric pipes (31, 32) projecting to the outside through said housing head (20).

2. The linear actuator according to claim 1, ***characterized in that*** the inner one of said two concentric pipes (31, 32) acts on the mass (1) to be moved, and the outer one is coupled to said spindle nut (21).

3. The linear actuator according to claim 2, ***characterized in that*** said inner pipe (32) protrudes, at the end thereof facing the mass (1) to be moved, from said outer pipe (33) by a predetermined distance in an axial direction.

4. The linear actuator according to any one of claims 1 to 3, ***characterized in that*** said elastomer material (33) is comprised of an electrically insulating substance.

5. The linear actuator according to any one of claims 1 to 4, ***characterized in that*** said elastomer material (33) is provided only in areas inside the gap.

6. The linear actuator according to any one of claims 1 to 5, ***characterized in that*** said elastomer material (33) is comprised of natural rubber, silicone rubber, ethylene-propylene-diene terpolymer (EPDM), or polyurethane.

7. The linear actuator according to any one of claims 1 to 6, ***characterized in that*** in the gap between said two concentrically arranged pipes (31, 32), at the end region thereof facing the mass (1) to be moved, an O-ring (40) protecting said elastomer material (33) against external influences is disposed.

## Revendications

1. Actionneur linéaire à entraînement électrique pour le déplacement linéaire d'une masse (1), où au moins un élément actionneur oblong (31, 32, 33), agissant sur la masse (1) côté sortie, est logé à l'intérieur d'un cylindre principal (18, 20) de manière à pouvoir coulisser en direction axiale, et est accouplé à un écrou d'axe (21) côté entraînement, lequel est lui-même monté sur un axe (24) logé de manière à pouvoir être entraîné en rotation par un moteur électrique (10) à l'intérieur du cylindre principal (18, 20), de telle manière qu'en cas de déplacement axial dudit écrou d'axe entraîné par la rotation de l'axe (24), ledit écrou d'axe repousse chaque élément actionneur (31, 32, 33) de manière télescopique par rapport au cylindre principal (18, 20),
ledit cylindre principal (18, 20) comportant une tête de carter (20), **caractérisé en ce que**
chaque élément actionneur est composé de deux cylindres (31, 32) disposés concentriquement en formant un espacement tubulaire d'épaisseur définie, et raccordés par adhérence au moyen d'un matériau élastomère (33) disposé dans ledit espacement,
un des deux cylindres (31, 32) concentriques agissant sur la masse (1) à déplacer et l'autre étant accouplé à l'écrou d'axe (21), et
les deux cylindres (31, 32) concentriques sortent de la tête de carter (20) vers l'extérieur.

2. Actionneur linéaire selon la revendication 1, **caractérisé en ce que** l'intérieur des deux cylindres (31, 32) concentriques agit sur la masse (1) à déplacer et **en ce que** l'extérieur est accouplé à l'écrou d'axe (21).

3. Actionneur linéaire selon la revendication 2, **caractérisé en ce qu'**à son extrémité dirigée vers la masse (1) à déplacer, le cylindre intérieur (32) sort d'une course définie du cylindre extérieur (33) en direction axiale.

4. Actionneur linéaire selon l'une des revendications 1 à 3, **caractérisé en ce que** le matériau élastomère (33) est un matériau isolant électrique.

5. Actionneur linéaire selon l'une des revendications 1 à 4, **caractérisé en ce que** le matériau élastomère (33) n'est prévu que partiellement à l'intérieur de l'espacement.

6. Actionneur linéaire selon l'une des revendications 1 à 5, **caractérisé en ce que** le matériau élastomère (33) est en caoutchouc naturel, en caoutchouc de silicone, en éthylène-propylène-diène terpolymère (EPDM) ou en polyuréthane.

7. Actionneur linéaire selon l'une des revendications 1 à 6, **caractérisé en ce qu'**un joint torique (40) est disposé dans l'espacement entre les deux cylindres (31, 32) concentriques, à la zone d'extrémité de celui-ci dirigé vers la masse (1) à déplacer, pour protéger le matériau élastomère (33) contre les influences extérieures.
